Europäisches Patentamt

European Patent Office

Office européen des brevets

(19)

(11) EP 0 870 275 B1

(12) EUROPÄISCHE PATENTSCHRIFT

(45) Veröffentlichungstag und Bekanntmachung des Hinweises auf die Patenterteilung:
12.06.2002 Patentblatt 2002/24

(21) Anmeldenummer: 96905681.1

(22) Anmeldetag: 04.03.1996

(51) Int Cl.7: G06K 9/52

(86) Internationale Anmeldenummer:
PCT/DE96/00381

(87) Internationale Veröffentlichungsnummer:
WO 96/27848 (12.09.1996 Gazette 1996/41)

(54) **VERFAHREN ZUR MUSTERERKENNUNG UND VERFAHREN ZUM ERSTELLEN EINES N-DIMENSIONALEN OBJEKTES**

METHOD OF PATTERN RECOGNITION AND METHOD OF CREATING AN N-DIMENSIONAL OBJECT

PROCEDE DE RECONNAISSANCE DE MOTIFS ET PROCEDE DE REALISATION D'UN OBJET A N DIMENSIONS

(84) Benannte Vertragsstaaten:
BE CH DE FR GB LI NL

(30) Priorität: 03.03.1995 DE 19507564

(43) Veröffentlichungstag der Anmeldung:
14.10.1998 Patentblatt 1998/42

(73) Patentinhaber: Definiens AG.
80331 München (DE)

(72) Erfinder:
• ENTLEITNER, Renate
D-80637 München (DE)
• SÖGTROP, Michael
D-85586 Poing (DE)

(74) Vertreter: Winter, Brandl, Fürniss, Hübner, Röss, Kaiser, Polte Partnerschaft
Patent- und Rechtsanwaltskanzlei
Alois-Steinecker-Strasse 22
85354 Freising (DE)

(56) Entgegenhaltungen:
• PATTERN RECOGNITION, Bd. 24, Nr. 10, 1.Januar 1991, Seiten 949-957, XP000243557 JIA-GUU LEU: "COMPUTING A SHAPE'S MOMENTS FROM ITS BOUNDARY"

**Beschreibung**

Die vorliegende Erfindung bezieht sich auf ein Verfahren zur Mustererkennung, das es ermöglicht, das Muster eines n-dimensionalen Objektes mittels einer Datenverarbeitungseinrichtung zu erfassen und zu erkennen.

Die Mustererkennung stellt in vielen technischen Gebieten ein zentrales Problem dar. Eine derartige Mustererkennung soll es ermöglichen, n-dimensionale Objekte mittels einer Datenverarbeitungseinrichtung in der Weise zu erfassen, daß die Datenverarbeitungseinrichtung mit möglichst hoher Präzision bestimmen kann, welchem n-dimensionalen Objekt das jeweilige Muster zuzuordnen ist. Eine hochpräzise Mustererkennung n-dimensionaler Objekte würde es beispielsweise gestatten, Fahrzeuge jeder Art automatisch zu lenken, so daß durch menschliches Versagen hervorgerufene Unfälle weitgehend vermieden werden könnten. Darüber hinaus wäre es möglich, die Handschrift einer beliebigen Person automatisch und mit hoher Präzision zu erkennen. Auch die Herstellung von Automaten oder Robotern, die mit einer intelligenten Sensorik ausgestattet sind, wäre bei einer hochpräzisen Mustererkennung kein Problem.

Im Stand der Technik sind bereits zahlreiche Verfahren zur Mustererkennung bekannt. Ein Nachteil der bekannten Verfahren liegt jedoch darin, daß sie jeweils nur für spezielle Arten von Objekten verwendbar sind. Die allgemeine Verwendbarkeit dieser bekannten Verfahren ist somit stark eingeschränkt. Ein weiterer Nachteil der bekannten Verfahren liegt darin, daß insbesondere das sichere Erkennen hochkomplexer bzw. fraktaler Strukturen entweder gar nicht oder nur mit äußerst hoher Rechenleistung gelingt, so daß eine Mustererkennung in Echtzeit nicht möglich ist.

In zahlreichen technischen Gebieten stellt sich derzeit das Problem, n-dimensionale Objekte mittels einer Datenverarbeitungseinrichtung zu simulieren und/ oder darzustellen. So ist es zum Beispiel bei den derzeit gebräuchlichen, objektorientierten Zeichen-, Bildbearbeitungs-, Vektorgraphik- und CAD-Programmen erforderlich, bestimmte ausgewählte Objekte durch gezielte Manipulation geeignet zu verändern. Die bislang bekannten Verfahren zum gezielten Modifizieren oder zum erstmaligen Erstellen eines solchen Objektes sind häufig benutzerunfreundlich und mühsam durchzuführen. Insbesondere die rasche Erstellung oder Modifikation hochkomplex strukturierter Objekte stößt bei diesen bekannten Verfahren auf Schwierigkeiten.

Der Erfindung liegt die Aufgabe zugrunde, ein Mustererkennungsverfahren zu schaffen, das bei universeller Anwendbarkeit eine rasche und treffsichere Mustererkennung bzw. eine äußerst einfache Manipulation des betreffenden n-dimensionalen Objektes gewährleistet ist.

Diese Aufgabe wird erfindungsgemäß mit den in Anspruch 1 angegebenen Verfahrensschritten gelöst.

Der Grundgedanke der Erfindung liegt demnach darin, ein n-dimensionales Objekt anhand seiner genauigkeitsabhängigen Unebenmäßigkeit oder Unebenheit zu identifizieren bzw. ein von einer Datenverarbeitungseinrichtung generiertes Objekt anhand seiner genauigkeitsabhängigen Unebenmäßigkeit abzuändern oder zu manipulieren. Da im wesentlichen alle Datenverarbeitungseinrichtungen ohne weiteres in der Lage sind, ein jeweiliges n-dimensionales Objekt mit unterschiedlicher Genauigkeit zu simulieren bzw. darzustellen, läßt sich das genannte Grundprinzip der Erfindung mit jeder herkömmlichen Datenverarbeitungseinrichtung problemlos durchführen, so daß entsprechend geringe Kosten auftreten. Darüber hinaus kann die hierzu erforderliche Software auf sehr effiziente und entsprechend schnelle Algorithmen zurückgreifen, so daß die erfindungsgemäße Mustererkennung bzw. Objektmanipulation durch eine äußerst hohe Verarbeitungsgeschwindigkeit gekennzeichnet ist. Ein weiterer Vorteil der Erfindung liegt schließlich darin, daß sie bei unterschiedlichst gestalteten Objekten erfolgreich verwendet werden kann, wobei sogar fraktale Strukturen keinerlei Probleme bereiten.

Das Dokument PATTERN RECOGNITION, Bd. 24, Nr. 10, 1. Januar 1991, Seiten 949-957, JIA-GUU LEU: 'COMPUTING A SHAPE'S MOMENTS FROM ITS BOUNDARY' zeigt verschiedene Methoden zur Berechnung von Momenten. Es vergleicht im Besonderen zwischen der flächenbasierten und der randpunktbasierten Methode. Zu diesem Zweck werden die Berechnungszeiten der Momente für verschiedene "Genauigkeiten" (im Sinne der vorliegenden Anmeldung) verglichen; siehe Figur 5 und Abschnitt 3.

Gemäß den in Anspruch 1 angegebenen Verfahrensschritten wird die der Erfindung zugrundeliegende Aufgabe im einzelnen dadurch gelöst, daß das betreffende n-dimensionale Objekt in mindestens zwei unterschiedlichen Genauigkeiten (s) rechnerintern abgebildet wird, daß bei jeder abgebildeten Genauigkeit mindestens eine Kenngröße (U) des n-dimensionalen Objektes durch Integration oder Summenbildung einer Eigenschaft ermittelt wird, und daß die funktionale Abhängigkeit (also ein Wert U(s)) der integrierten bzw. summierten Kenngröße bzw. Kenngrößen von der Genauigkeit bestimmt und als Maß für das zu erkennende Muster herangezogen wird.

Durch Bestimmung dieser funktionalen Abhängigkeit U(s) läßt sich die von der Genauigkeit abhängige Unebenmäßigkeit des zu erkennenden n-dimensionalen Objektes auf sehr einfache und gleichwohl äußerst charakteristische Weise darstellen.

Somit ist es gemäß der im Anspruch 8 angegebenen Weiterbildung der Erfindung beispielsweise möglich, das zu erkennende Muster durch Vergleich dieser ermittelten funktionalen Abhängigkeit U(s) mit (gegebenenfalls im voraus) gespeicherten Kennlinien zu bestimmen. Ein derartiger Vergleich ist rechnerisch auf äußerst einfache Weise durchführbar.

Die für das erfindungsgemäße Verfahren herangezogene aufintegrierte bzw. aufsummierte Kenngröße wird erfindungsgemäß so gewählt, daß ein möglichst optimaler Bezug zu dem jeweiligen n-dimensionalen Objekt gegeben ist.

Nach der Lehre des Anspruchs 2 wird zu diesem Zweck beispielsweise eine relevante Eigenschaft des Objektes, wie z.B. die Topographie, die Farbverteilung, die Oberfläche, der Randverlauf oder die Dichteverteilung, rechnerintern abgebildet und es wird als integrale Kenngröße eine Gesamtsumme dieser relevanten Eigenschaft ermittelt, also beispielsweise das Gesamtvolumen, der Gesamtwert der Farbdichte, die Gesamtoberfläche, die Gesamtlänge des Randes bzw. der Gesamtwert der Dichte.

Da es sich bei dem zu erkennenden n-dimensionalen Objekt selbstverständlich nicht nur um ein optisch erfaßbares, sondern vielmehr auch um ein durch andere Empfänger, wie beispielsweise Radarempfänger, erfaßbares Objekt handeln kann, könnten je nach Bedarf auch andere relevante Eigenschaften, wie zum Beispiel der Strahlungsintensitätsverlauf, zur Ermittlung der integralen Kenngröße herangezogen werden.

Bei der Mustererkennung mehrerer n-dimensionaler Objekte können diese oftmals dann leicht miteinander verglichen werden, wenn die Größe aller Objekte normiert wird.

Gemäß der im Anspruch 3 angegebenen Weiterbildung der Erfindung ist daher vorgesehen, die jeweilige integrale Kenngröße und/oder die Genauigkeit auf einem bestimmten Größenwert des n-dimensionalen Objektes zu normieren, wobei es sich bei dem zur Normierung dienenden Größenwert beispielsweise um das Volumen, die Fläche, die Oberfläche oder den Umfang des Objektes handeln kann.

Mit Hilfe einer derartigen Normierung ist es weiterhin möglich, eine entfernungsunabhängige Mustererkennung durchzuführen.

Die für die Mustererkennung maßgebliche funktionale Abhängigkeit kann beispielsweise durch die von der Genauigkeit abhängige fraktale Dimension des untersuchten Objektes ausgedrückt werden. Alternativ hierzu ist es auch möglich, die funktionale Genauigkeit durch ein Mittelwertbildungsverfahren zu bestimmen, bei dem die Genauigkeit die geometrische Ausdehnung oder aber die Stärke der Mittelwertbildung repräsentiert. Weiterhin alternativ ist es möglich, die funktionale Abhängigkeit mittels einer Rasterbildung zu bestimmen, bei der die Genauigkeit die Feinheit des Rasters repräsentiert und bei der die sich ergebenden Teilstücke unregelmäßiger Objekte durch vordefinierte oder ebene Teilstücke ersetzt werden.

Die jeweiligen Funktionsverläufe, die bei Verwendung dieser unterschiedlichen funktionalen Abhängigkeiten (fraktale Dimension, Mitterwertbildung, Rasterbildung) erhalten werden, unterscheiden sich selbstverständlich. Jedoch ermöglicht es jedes dieser unterschiedlichen Verfahren, das Muster des jeweils erfaßten Objektes zu erkennen. Gleichwohl kann gegebenenfalls daran gedacht werden, ein und dieselben Objekte mit Hilfe mehrerer verschiedener funktionaler Abhängigkeiten zu untersuchen, um weitere Unterschiede zwischen den Objekten erkennen zu können.

Gemäß Anspruch 9 kann es sich bei der jeweiligen Genauigkeit, die zur Bestimmung der funktionalen Abhängigkeit benötigt wird, um die Auflösung oder um eine Detailtreue handeln, mit der das n-dimensionale Objekt rechenintern abgebildet wird.

Die Erfindung wird nachstehend anhand der Beschreibung von Ausführungsbeispielen unter Bezugnahme auf die Zeichnungen näher erläutert. Es zeigen:

Fig.1A drei verschiedene Objekte, deren von der jeweils gewählten Genauigkeit abhängiger Umfang durch ein Mittelwertbildungsverfahren bestimmt wird;

Fig.1B jeweils den von der Genauigkeit abhängigen Kurvenverlauf des Umfangs der in Fig.1A gezeigten Objekte;

Fig.2A ein dreieckförmiges Objekt, dessen Umfang durch ein Rasterbildungs- oder Schrittlängenänderungs-Verfahren ermittelt wird;

Fig.2B den Verlauf der funktionalen Abhängigkeit des Umfangs von drei Objekten, wenn die Rasterbildung verwendet wird;

Fig.3a ein erster Schritt bei einem Verfahren zur Objektmanipulation, bei dem als Objekt ein Quadrat vorgesehen ist, das über eine Fourier-Transformation manipuliert wird;

Fig.3b und 3c eine Manipulation des in Fig.3a gezeigten Quadrats, bei der die Phasen durch Zufallszahlen ersetzt worden sind;

Fig.3d eine Manipulation des in Fig.3a gezeigten Quadrats, bei der die Amplituden zweifach skaliert worden sind;

Fig.3e und 3f eine Manipulation des in Fig.3d gezeigten, durch Manipulation entstandenen Objekts, bei der die Phasen durch Zufallszahlen ersetzt worden sind;

Fig.3g und 3h eine Manipulation des in Fig.3f gezeigten, durch Manipulation entstandenen Objekts, bei der jeweils eine zweifache Komprimierung des Spektrums vorgenommen worden ist;

Fig.3i und 3j eine Manipulation des in Fig.3h gezeigten, durch Manipulation entstandenen Objekts, bei der jeweils eine dreifache Expansion des Spektrums vorgenommen worden ist;

Fig.3k ein Quadrat, das als Grundlage zur manuellen Änderung von Spektren dient;

Fig.3l bis 3n Objekte, die durch Manipulation des in Fig.3k gezeigten Objekts entstehen, wenn die Amplitude zu f=20 erhöht wird bzw. wenn die Amplitude zu f=36 erhöht wird bzw. wenn weitere Amplituden erhöht werden; und

Fig.4a bis 4f weitere Beispiele erfindungsgemäßer Verfahren zur Objektmanipulation.

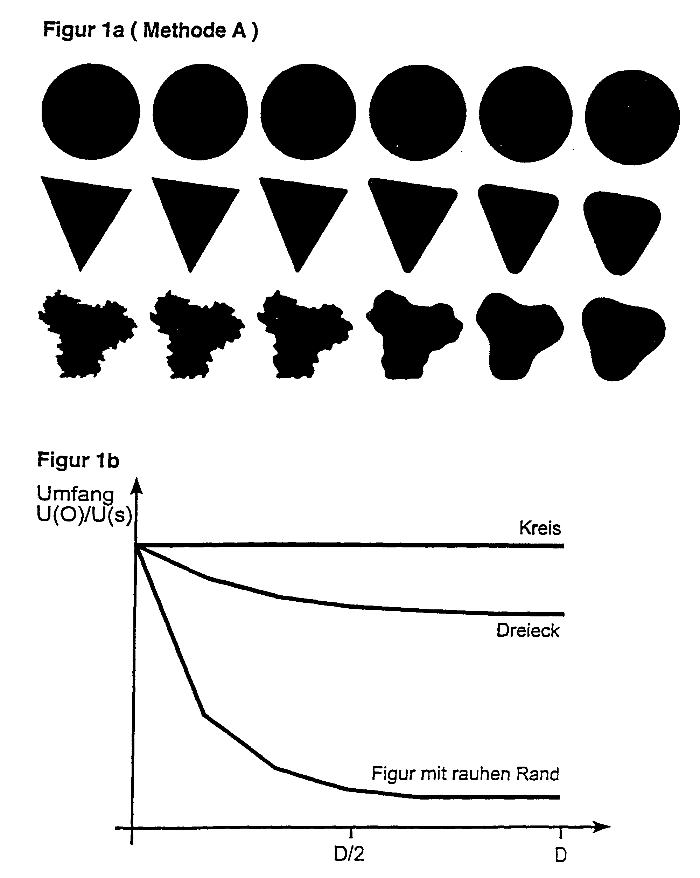

In Fig.1A sind als Beispiel für die n-dimensionalen Objekte, die mit dem erfindungsgemäßen Mustererkennungsverfahren erkannt werden können, zweidimensionale bzw. flächige Objekte gezeigt, nämlich in der Reihenfolge von oben nach unten eine Kreisfläche, eine Dreieckfläche und eine unregelmäßig geformte bzw. fraktale Fläche. Um durch Mustererkennung zu bestimmen, um welches Objekt es sich jeweils handelt, wird bei diesem Ausführungsbeispiel der Erfindung eine Mittelwertbildung durchgeführt, bei der jeweils eine bestimmte Anzahl von Bildelementen zusammengefaßt werden, wobei deren Mittelwert gebildet wird. Die Genauigkeit bzw. Auflösung und Detailtreue wird um so weiter herabgesetzt, je mehr Bildelemente zusammengefaßt bzw. gemittelt werden.

In Fig.1A ist jeweils links diejenige Darstellung des betreffenden Objekts (Kreisfläche, Dreieckfläche bzw. fraktale Fläche) gezeigt, bei der die höchste Auflösung gewählt ist, mit der die betreffende Datenverarbeitungseinrichtung Objekte dieser Art rechnerintern abzubilden vermag. Bei dieser höchsten Auflösung wird beispielsweise jedem Bildelement eine einzige Speicherstelle zugeordnet sein, so daß der "Wert" des Bildelements durch die Speicherstelle bestimmt wird. In Fig. 1A ist weiterhin gezeigt, wie die Auflösung der betrachteten Objekte von links nach rechts immer weiter herabgesetzt wird. Durch die Herabsetzung der Auflösung werden entsprechend immer mehr Bildelemente gemittelt, so daß sich die feinen Konturen der Objekte immer weiter "verwischen".

Bei jeder der in Fig.1A gezeigten sechs Genauigkeitsstufen, mit denen jedes Objekt abgebildet wird, wird durch Summenbildung oder Integration der Gesamtumfang des betreffenden Objektes berechnet. Wenn jeder Wert dieses Gesamtumfangs in ein Diagramm eingetragen wird, erhält man schließlich das in Fig.1B gezeigte Diagramm, das die funktionale Abhängigkeit des Umfangs U von der gewählten Genauigkeit s angibt, also eine durch eine Funktion U(s) beschriebene Kurve. Wie aus Fig.1B ersichtlich ist, wird mit dem erfindungsgemäßen Verfahren für jedes der drei gezeigten Objekte ein anderer Kurvenverlauf der funktionalen Abhängigkeit U(s) erzielt, so daß diese funktionale Abhängigkeit als Maß für das zu erkennende Muster bzw. Objekt herangezogen werden kann. Durch Vergleich der betreffenden Kurve beispielsweise mit gespeicherten Kurven ist es somit möglich, eine Mustererkennung durchzuführen.

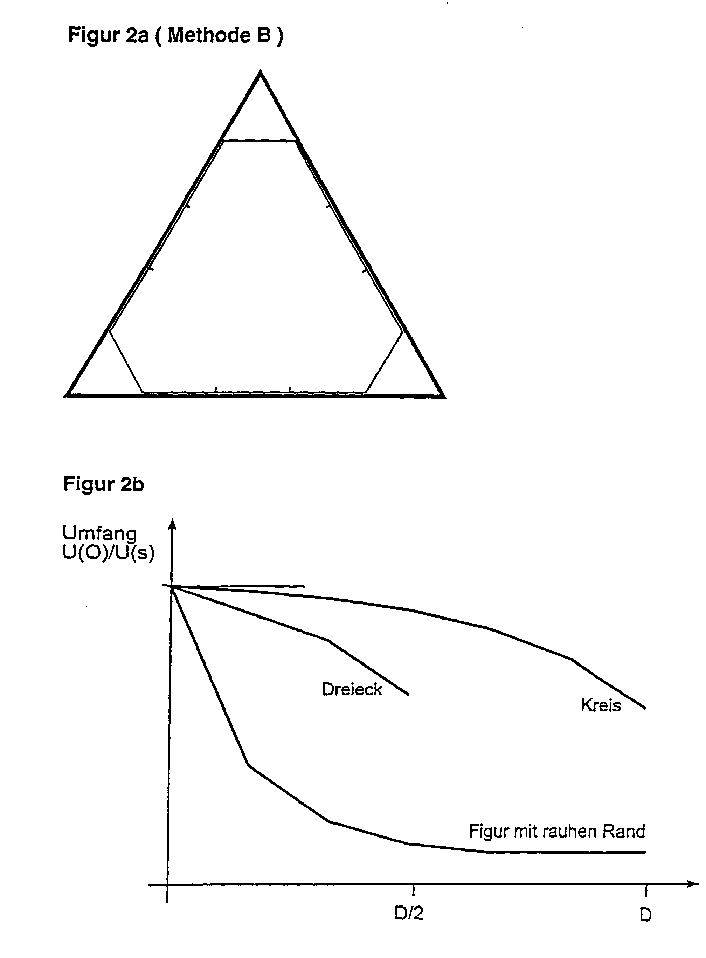

In Fig.2A ist eine weitere Ausführungsform des erfindungsgemäßen Mustererkennungsverfahrens gezeigt. Dieses Verfahren unterscheidet sich von dem in Fig.1A gezeigten dadurch, daß anstelle des Mittelwertbildungsverfahrens eine Rasterbildung bzw. eine Schrittlängenänderung durchgeführt wird. Wie aus Fig. 2A hervorgeht, wird die Genauigkeit bei diesem Ausführungsbeispiel durch die Feinheit des Rasters repräsentiert, wobei die sich ergebenden Teilstücke des betreffenden Objekts (Dreieck) durch vordefinierte ebene Teilstücke ersetzt werden. In Fig.2A sind beispielsweise zwei verschiedene Rasterweiten bzw. Genauigkeiten dargestellt.

Wenn das in Fig.2A gezeigte Verfahren auf verschiedene Objekte, wie beispielsweise einen Kreis, ein Dreieck oder eine Figur mit rauhem Rand angewendet wird, ergibt sich für die funktionale Abhängigkeit des Umfangs von der Genauigkeit bzw. dem Rastermaß der in Fig.2B gezeigte charakteristische Verlauf, der wie beim ersten Ausführungsbeispiel als Maß für das zu erkennende Muster herangezogen werden kann.

Gegebenenfalls ist es selbstverständlich möglich, die beiden in den Fig.1 und 2 gezeigten Verfahren gleichzeitig durchzuführen, falls bei einem dieser Verfahren noch keine befriedigende Trefferrate bei der Mustererkennung erzielt wird.

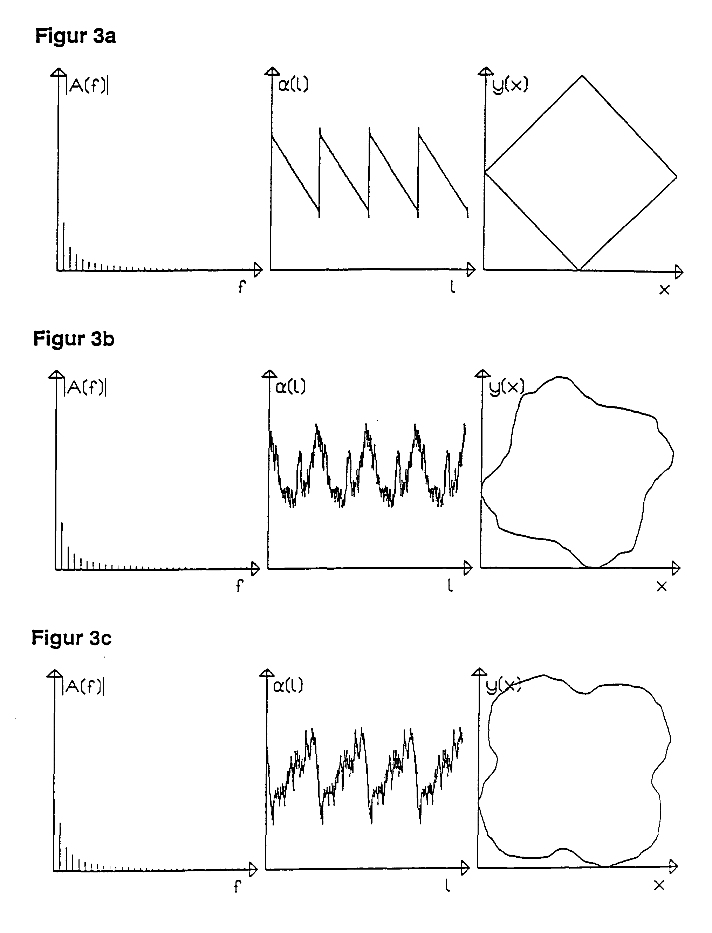

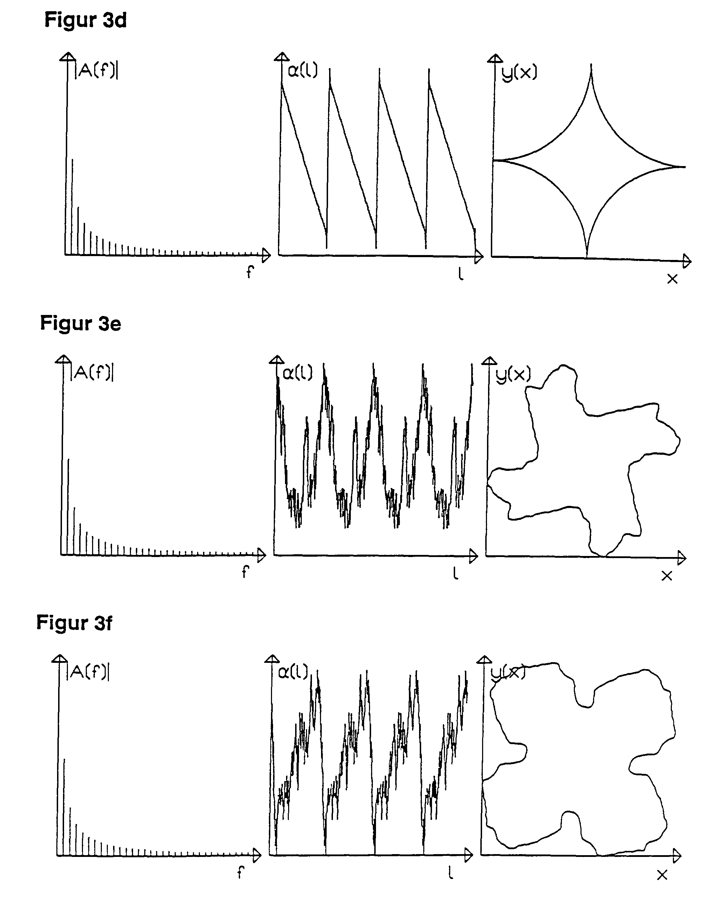

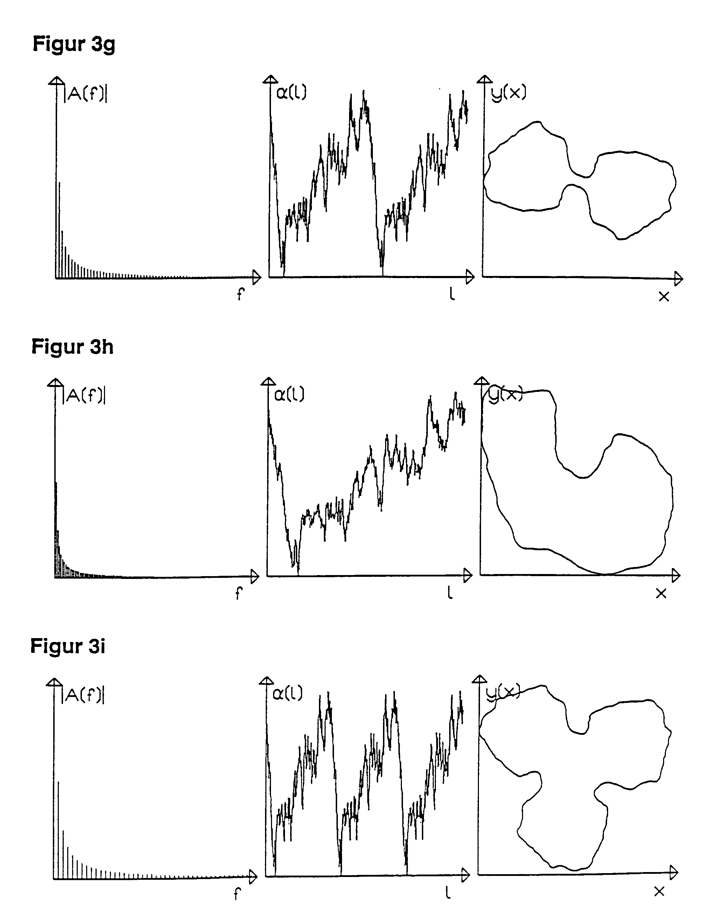

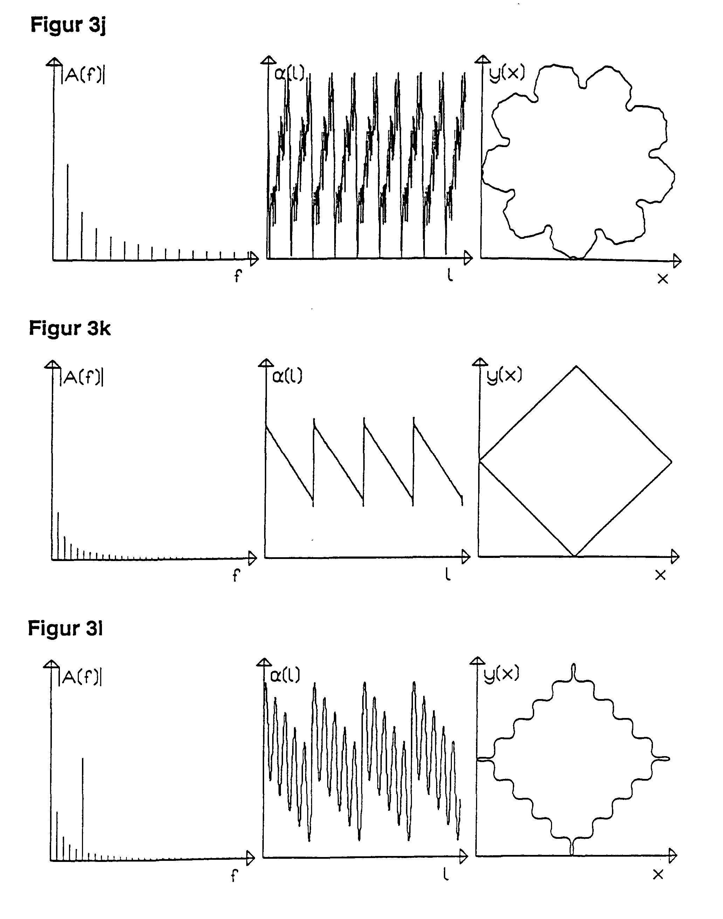

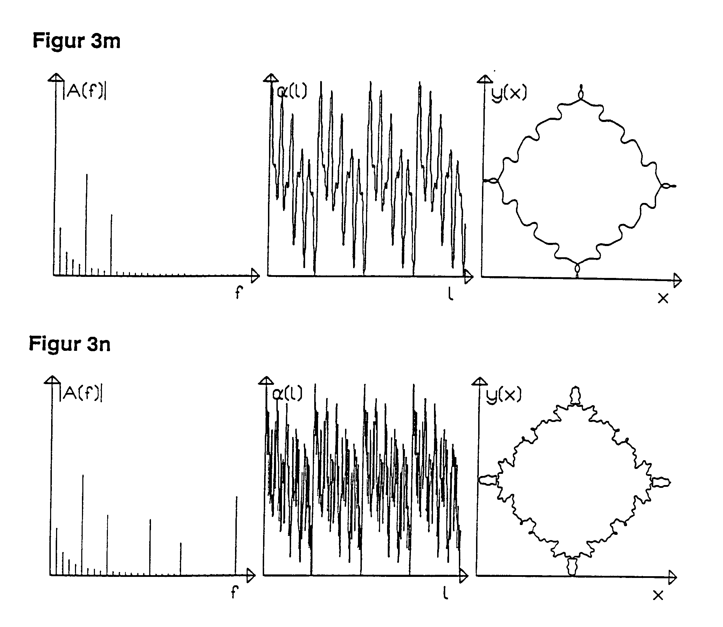

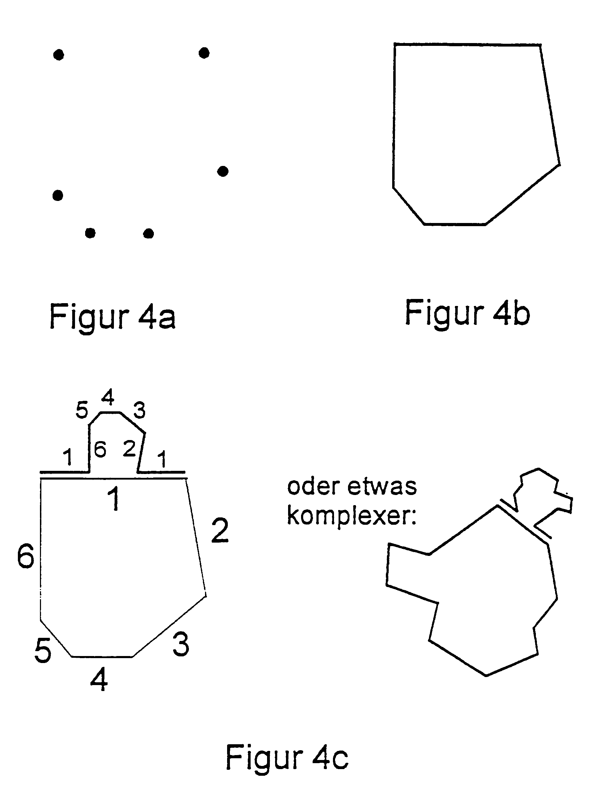

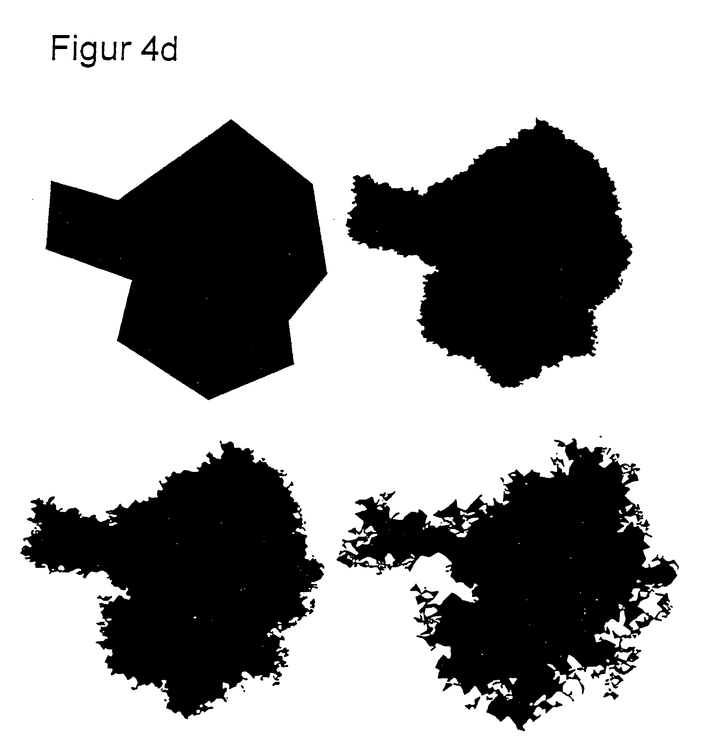

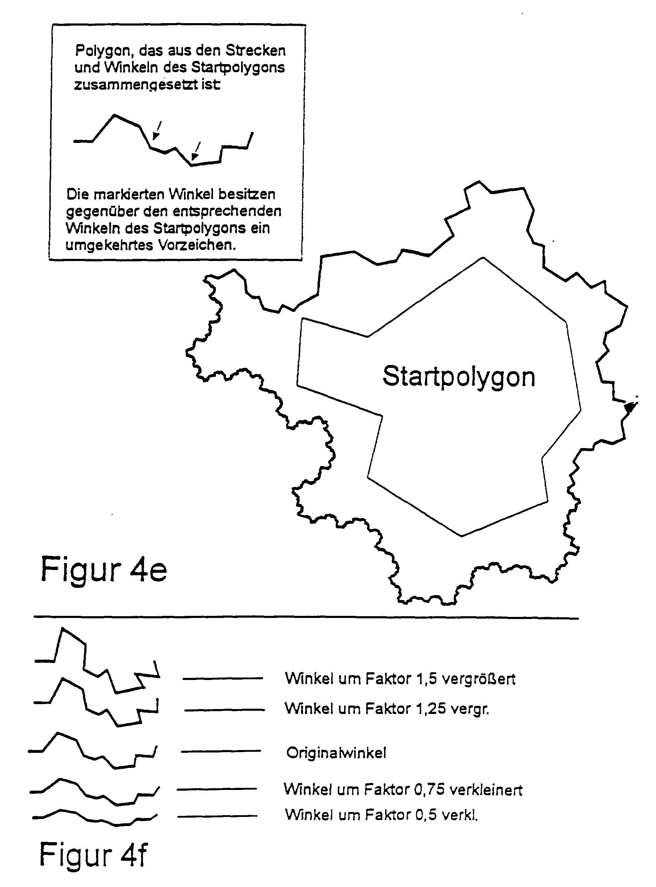

Nachfolgend werden unter Bezugnahme auf die Figuren 3 und 4 mehrere Ausführungsbeispiele für die Objektmanipulation bzw. Objekterzeugung näher erläutert.

Ein sehr allgemeines Verfahren zur Musterbzw. Objektgestaltung besteht beispielsweise darin, ein geometrisches Objekt in eine Funktion zu transformieren und anschließend, zum Beispiel durch eine Fouriertransformation, in ein orthonormales Funktionensystem zu entwickeln. Die skalenabhängige Funktion bzw. funktionale Abhängigkeit U(s) ist hierbei durch die Entwicklungskoeffizienten in Form einer Abbildung des Indexraumes des Funktionensystems auf den Raum der Entwicklungskoeffizienten gegeben. Zur Mustergestaltung kann ein beliebiges Objekt (und zwar nicht nur ein Polygon) vorgegeben und über U(s) modifiziert werden.

Als Beispiel sei nachfolgend der Rand einer Fläche genommen. Eine Moglichkeit, eine eindeutige Funktion zu erzeugen, besteht z.B. darin für jeden Punkt des Randes die Richtung der Randlinie zu bestimmen. Man startet an einer beliebigen Stelle und bestimmt den Winkel $\alpha$ in Abhängigkeit von der Länge der auf dem Rand zurückgelegten Strecke l. Um bei zyklischen Objekten ein ständiges Anwachsen des Winkels $\alpha$ oder einen Sprung von $\alpha$ beim Erreichen des Startpunktes zu vermeiden, wird von $\alpha(l)$ eine linear anwachsende Funktion abgezogen, die bei einmaliger Umdrehung von 0 bis $2\pi$ ansteigt.

Dieses Verfahren ist in den Figuren 3a bis 3n näher dargestellt. In Fig.3a sind rechts als geometrisches Objekt ein in den Koordinatenachsen x und y dargestelltes Viereck, in der Mitte daneben das korrespondierende $\alpha(l)$ und links daneben die Amplitude A(f) des Fourier-Spektrums gezeigt. Wie bereits erläutert wurde, ist die Funktion $\alpha(l)$ eine Funktion, bei der eine linear von 0 bis $2\pi$ steigende Funktion abgezogen ist, um einen Sprung beim Erreichen des Startpunktes zu vermeiden. Hierdurch wird erreicht, daß die sich für ein Quadrat ergebende Stufenfunktion in die in der Mitte von Fig.3a gezeigte Sägezahnfunktion umgewandelt wird. In dem linken Kasten der Fig.3a sind die Amplituden |A| der Fourierkoeffizienten

$$A(f) = \int_0^{l\max} \alpha(l) e^{\frac{2\pi}{l\max} i f l} dl$$

gezeigt. Die Phasen der komplexen Zahlen A(f) sind jedoch nicht gezeigt. Gleichwohl werden diese ebenfalls berechnet und gespeichert, da es andernfalls nicht möglich ist, aus den Werten der Fourier-Transformation wieder vollständig den Verlauf der Funktion $\alpha(1)$ und damit das zugrundeliegende Objekt zu generieren. Die funktionale Abhängigkeit U(s), also hier A(f), muß folglich so berechnet und gespeichert werden, daß eine vollständige Umkehrbarkeit (Bijektivität) erzielt werden kann. Auch $\alpha(1)$ muß eine umkehrbare bzw. bijektive Funktion sein.

In den Figuren 3b bis 3n wird das vorstehend erläuterte Spektrum und damit U(s) auf einfache Weise manipuliert. In den Figuren 3b und 3c erfolgt diese Manipulation z.B. dadurch, daß die jeweiligen Phasen durch Zufallszahlen ersetzt werden. Fig.3d geht aus Fig. 3a durch eine Skalierung der Amplituden um einen Faktor 2 hervor und die Figuren 3e und 3f enstehen aus Fig. 3d wieder durch über Zufallszahlen erzeugte Phasen ("Zufallsphasen"). Die Figuren 3g und 3h gehen aus Fig. 3f durch wiederholte Kompression (d.h. Skalierung) der Funktion U(s) entlang der s-Achse um einen Faktor 2 hervor. Die Figuren 3i und 3j entstehen durch wiederholte Expansion (d.h. umgekehrte Kompression) um einen Faktor 3 aus Fig.3h. In den Figuren 3k bis 3n ist schließlich ein Beispiel für eine manuelle Modifikation von U(s) angegeben.

Zur Mustergestaltung kann der Benutzer somit mit einem beliebigen geometrischen Objekt (z.B. auch einem einfachen spiel durch Zufallsphase, Skalierung, Expansion, Kompression, Verschiebung, Addition, Subtraktion, Mutiplikation, Division oder manuelle Gestaltung von Spektren, aber auch direkt oder als Funktion. Die Manipulationen konnen dabei auch so angewendet werden, daß sie nicht auf das ganze Objekt oder das ganze U(s), sondern nur auf Teile davon wirken.

Interaktiv kann die Mustergestaltung zum Beispiel wie folgt durchgeführt werden: Der Benutzer zeichnet ein geometrisches Objekt mit einem graphischen Eingabegerät. Das Objekt wird bei jeder Eingabe sofort in eine Funktion und in U(s) sowie in weitere zur Manipulation des Objekts geeignete Darstellungen des Objekts transformiert und in allen Darstellungen simultan in verschiedenen Fenstern graphisch angezeigt. Das Objekt, kann in jeder seiner Darstellungen graphisch oder mit analytischen Befehlen, deren Parameter eventuell graphisch festgelegt werden können, manipuliert werden. Um zu einem Spektrum das gleiche Spektrum oder ein anderes Spektrum verschoben oder expandiert zu addieren, kann man beispielsweise mit einem graphischen Eingabegerät ein bestimmtes s in der Anzeige von U(s) auswählen, um den Grad der Verschiebung oder Expansion festzulegen.

Aus der vorstehenden Beschreibung ist somit ersichtlich, daß bei der Mustererkennung in ebensolcher Weise wie bei der Mustergestaltung die skalenabhängige Kenngröße U(s) eine entscheidende Rolle spielt. Wesentlich ist, daß auch ein Großteil der Gestaltung automatisch vollzogen werden kann, indem in diesem Fall die skalenabhängige Rauhigkeit einer Kenngröße vorgegeben wird. Dabei wird als erster Schritt vom Benutzer die grobe Struktur eines Objektes festgelegt. Die Details, d.h. unregelmäßige Strukturen auf einer feineren Skala, werden anschließend aus der Vorgabe von U(s) automatisch errechnet. Da es dabei verschiedene Möglichkeiten gibt, d.h. da U(s) alleine das fertige Objekt noch nicht eindeutig festlegt, werden zusätzliche Optionen angeboten. Das vom Benutzer vorgegebene grobe Objekt dient dabei zumindest als Ausgangspunkt, kann aber sogar als Vorlage zur automatischen Gestaltung herangezogen werden.

Zum Beispiel kann in selbstähnlicher Weise das vom Benutzer vorgegebene Objekt auf feinerer Skala eingebaut werden. Weiterhin ist es aber auch möglich, die automatischen feinskaligen Aufrauhungen über vordefinierte Geometrien, wie ein Dreieck, ein n-Eck oder eine Sinus- Welle, oder aber auch statistisch vorzunehmen. In einem Anwendungsbeispiel für den Rand eines zweidimensionalen Objektes ist dies nachfolgend in Fig.4 gezeigt.

Über die vom Benutzer festgelegten Lokationen einer Anzahl Punkte im n-dimensionalen Raum wird ein Objekt vordefiniert. Je nachdem, um welche Dimension es sich handeln soll, spannen die Punkte z.B. einen Rand, eine Fläche oder ein Volumen auf. Mit der Unregelmäßigkeit der Verteilung dieser Punkte wird zumindest für *eine* Skala die Rauhigkeit festgelegt. Die Art dieser Rauhigkeit kann als Vorlage zur automatischen Gestaltung auf den anderen Skalen dienen. Dies wird für die Gestaltung des eindimensionalen Randes einer Fläche unter Bezugnahme auf Fig.4 im folgenden näher erläutert.

Schritt 1: Gemäß Fig.4a werden zunächst Punkte festgelegt. Gemäß Fig.4b werden als anschließender Schritt 2 diese Punkte automatisch durch vordefinierte eindimensionale geometrische Objekte (nämlich im gezeigten Beispiel durch gerade Linien) zu einem geschlossenen Polygon verbunden. Der Rand "nullter Näherung", R(0), ist somit bestimmt.

Schritt 3: Aktive Bereiche (nämlich Teilabschnitte des Randes oder auch der gesamte Rand), für die die nachfolgenden Operationen durchgeführt werden sollen, werden definiert.

Schritt 4: Es wird die funktionale Abhängigkeit U(s) und damit der skalenabhängige Grad der Aufrauhung für die aktiven Bereiche vom Benutzer festgelegt. Um einen entsprechenden Prozentsatz werden die geraden Linien später automatisch durch Aufrauhung verlängert.

Schritt 5: Die Art der Aufrauhung wird vom Benutzer festgelegt. Es gibt eine große Anzahl von Möglichkeiten, eine Strecke aufzurauhen. Verschiedene Optionen können in diesem Zusammenhang vorgesehen werden, nämlich z.B.:

Eine fraktale, selbstähnliche Option, bei der der komplette Rand R(0) verkleinert in seine eigenen Untersegmente eingebaut wird (siehe Fig. 4c). Dabei kann durch Markierungen die jeweilige Art und Weise festgelegt werden.

Eine statistische Option, bei der durch Zufallsmethoden die Art der Aufrauhung (und durch U(s) der Grad der Aufrauhung) bestimmt wird (siehe Fig.4d).

Eine winkelerhaltende Option, bei der die in R(0) vorkommenden Winkel nacheinander aufgetragen werden, um ein Polygon zu erzeugen. Die Länge der Strecken des Polygons entsprechen den Strecken von R(0) und sind alle proportional um den gleichen Faktor verkleinert. Die Vorzeichen der Winkel können statistisch oder nach bestimmten Regeln ermittelt werden. Über diese Regeln können mehr oder weniger konkave oder konvexe Polygone erzeugt werden (siehe Fig.4e).

Eine längen-selbstähnliche, winkel-proportionale Option. Diese Option ist der fraktalen ähnlich. Hier werden jedoch die Winkel von R(0) nicht notwendigerweise erhalten, sondern solange proportional vergrößert bzw. verkleinert, bis U(s) den gewünschten Wert erhalten hat (siehe Fig.4f).

Eine Option, bei der vordefinierte (Wellen, Dreiecke, Vierecke, usw.) oder vom Benutzer definierte (bzw. gezeichnete) Geometrien verwendet werden (siehe Fig.4f).

Die vorgenannten Optionen können selbstverständlich auch kombiniert werden.

Schritt 6: Die Strecken in R(0) werden durch die errechneten Polygone ersetzt. Die Strecken der Polygone werden dabei durch entsprechende Polygone (und zwar unter Berücksichtigung von U(s)) ersetzt, usw. Diese Operationen werden auf einer immer feiner werdenden Skala solange wiederholt, bis die Pixelgröße, d.h. die größte darstellbare Genauigkeit, erreicht ist.

Ein weiterer Parameter, der möglicherweise frei gewählt werden kann, ist die Phase, bzw. im diskreten Fall die Reihenfolge oder Permutation der Streckensegmente. Beim Ersetzen einer Strecke durch ein Polygon kann z.B. die Reihenfolge der Polygonsegmente statistisch bestimmt werden. Es kann aber auch die Reihenfolge im Vergleich zu den Nachbarpolygonen permutiert oder auch gleich sein. Eine skalenabhängige Phase wird dadurch festgelegt, daß mit U(s) nicht nur die Amplitude, sondern auch die "Startstrecke" für einen bestimmten Punkt festgelegt wird. Damit wird U(s) zu einer komplexen Funktion mit Amplitude und Phase.

## Patentansprüche

**1.** Verfahren zur Mustererkennung, bei dem das Muster eines n-dimensionalen Objektes mittels einer Datenverarbeitungseinrichtung erfaßt wird, die in der Lage ist, das n-dimensionale Objekt mit unterschiedlicher Genauigkeit (s) rechnerintern abzubilden und zu verarbeiten, wobei

**[a]** das n-dimensionale Objekt in mindestens zwei unterschiedlichen Genauigkeiten (s) rechnerintern abgebildet wird,

**[b]** bei jeder abgebildeten Genauigkeit (s) mindestens eine Kenngröße (U) des n-dimensionalen Objektes durch Integration oder Summenbildung einer Eigenschaft des n-dimensionalen Objektes ermittelt wird, und

**[c]** die funktionale Abhängigkeit (U(s)) der integrierten bzw. summierten Kenngröße(n) von der Genauigkeit (s) bestimmt und als Maß für das zu erkennende Muster herangezogen wird.

**2.** Verfahren nach Anspruch 1, wobei mittels der elektronischen Datenverarbeitungseinrichtung mindestens eine relevante Eigenschaft, wie z.B. Topographie, Farbverteilung, Oberfläche, Randverlauf, Dichteverteilung etc., des n-dimensionalen Objektes rechnerintern abgebildet wird und als integrale Kenngröße eine Gesamtsumme der relevanten Eigenschaft, wie z.B. Gesamtvolumen, Gesamtwert der Farbdichte, Gesamtoberfläche, Gesamtlänge des Randes bzw. Gesamtwert der Dichte, ermittelt wird.

**3.** Verfahren nach Anspruch 1 oder 2, wobei die integrale Kenngröße (U) und/oder die Genauigkeit (s) auf einen bestimmten Größenwert des n-dimensionalen Objektes normiert wird.

**4.** Verfahren nach Anspruch 3, wobei der zur Normierung dienende Größenwert das Volumen, die Fläche, die Oberfläche oder der Umfang des n-dimensionalen Objektes ist.

**5.** Verfahren nach einem der Ansprüche 1 bis 4, wobei als funktionale Abhängigkeit (U(s)) die von der Genauigkeit (s) abhängige fraktale Dimension des n-dimensionalen Objektes ermittelt wird.

**6.** Verfahren nach einem der Ansprüche 1 bis 4, wobei die funktionale Abhängigkeit (U(s)) durch ein Mittelwertbildungsverfahren bestimmt wird, bei dem die Genauigkeit (s) die geometrische Ausdehnung oder die Stärke der Mittelwertbildung repräsentiert.

**7.** Verfahren nach einem der Ansprüche 1 bis 4, wobei die funktionale Abhängigkeit (U(s)) durch eine Rasterbildung ermittelt wird, bei der die Genauigkeit (s) die Feinheit des Rasters repräsentiert und bei der die sich ergebenden Teilstücke unregelmäßiger Objekte durch vordefinierte, vorzugsweise ebene Teilstücke ersetzt werden.

8. Verfahren nach einem der Ansprüche 1 bis 7, wobei das zu erkennende Muster durch Vergleich der ermittelten funktionalen Abhängigkeit (U(s)) mit gespeicherten Kennlinien bestimmt wird.

9. Verfahren nach einem der Ansprüche 1 bis 8, wobei die jeweilige Genauigkeit (s) aus einer Auflösung oder einer Detailtreue hergeleitet wird, mit der das n-dimensionale Objekt rechnerintern abgebildet wird.

## Claims

1. A technique for pattern recognition, in which the pattern of an n-dimensional object is measured by means of a data-processing system capable of mapping and processing the n-dimensional object with different accuracy (s) in computer memory, wherein

   [a] the n-dimensional object is mapped in at least two different accuracies (s) in computer memory,

   [b] for each mapped accuracy (s) at least one characterizing variable (U) of the n-dimensional object is determined by integration or summation of a property of the n-dimensional object, and

   [c] the functional dependence (U(s)) of the integrated or summed characterizing variable(s) on accuracy (s) is determined and used as a measure of the pattern to be recognized.

2. A technique according to claim 1, wherein, by means of the electronic data-processing system, at least one relevant property such as, e.g., topography, color distribution, surface, boundary profile, density distribution, etc. of the n-dimensional object is mapped in computer memory, and a grand total of the relevant property such as, e.g., total volume, total value of color density, total surface, total boundary length or total value of density is determined as the integral characterizing variable.

3. A technique according to claim 1 or 2, wherein the integral characterizing variable (U) and/or the accuracy (s) is normalized to a specified quantitative value of the n-dimensional object.

4. A technique according to claim 3, wherein the quantitative value used for normalization is volume, area, surface or periphery of the n-dimensional object.

5. A technique according to one of claims 1 to 4, wherein the accuracy (s)-dependent fractal dimension of the n-dimensional object is determined as the functional dependence (U(s)).

6. A technique according to one of claims 1 to 4, wherein the functional dependence (U(s)) is determined by an averaging technique, in which the accuracy (s) represents the geometric extent or the thickness of the averaging process.

7. A technique according to one of claims 1 to 4, wherein the functional dependence (U(s)) is determined by grid generation, in which the accuracy (s) represents the fineness of the grid and in which the resulting elements of irregular objects are replaced by predefined elements, preferably plane ones.

8. A technique according to one of claims 1 to 7, wherein the pattern to be recognized is identified by comparison of the measured functional dependence (U(s)) with stored characteristic curves.

9. A technique according to one of claims 1 to 8, wherein the respective accuracy (s) is derived from a resolution or faithfulness to detail with which the n-dimensional object is mapped in computer memory.

## Revendications

1. Procédé de reconnaissance de formes dans lequel la forme d'un objet à n-dimensions est saisie au moyen d'un dispositif de traitement de données capable de la retranscrire dans le calculateur et de traiter l'objet à n-dimensions avec des précisions différentes (s) selon les étapes suivantes:

   [a] reproduction dans le calculateur de l'objet à n-dimensions avec au moins deux précisions différentes (s),

   [b] détermination d'au moins une grandeur caractéristique (U) de l'objet à n-dimensions par intégration ou formation de sommes d'une propriété de l'objet à n-dimensions pour chaque précision reproduite (s),

   [c] détermination de la dépendance fonctionnelle (U(s)) de la grandeur caractéristique (n) intégrée ou additionnée de la précision (s) et utilisation de cette dépendance comme indicateur pour reconnaître la forme.

2. Procédé selon la revendication 1 pour lequel au moins une propriété significative, comme par exemple, la topographie, la distribution des couleurs, la

surface, le bord, la distribution des densités etc, de l'objet à n-dimensions est retranscrite dans le calculateur et dans lequel procédé on détermine comme grandeur caractéristique intégrale une somme totale de la propriété significative, comme par exemple, le volume total, la valeur totale de la densité de couleur, la superficie totale, la longueur totale du bord ou la valeur totale de la densité.

3. Procédé selon la revendication 1 ou 2 dans lequel la grandeur caractéristique intégrale (U) et/ou la précision (s) sont normalisées sur une valeur de grandeur déterminée de l'objet à n-dimensions.

4. Procédé selon la revendication 3, dans lequel la valeur de grandeur utilisée pour normaliser est le volume, la surface, la superficie ou la circonférence de l'objet à n-dimensions.

5. Procédé selon une des revendications 1 à 4, dans lequel on détermine comme dépendance fonctionnelle (U(s)) la dimension fractale dépendant de la précision (s) de l'objet à n-dimensions.

6. Procédé selon une des revendications 1 à 4, dans lequel on détermine la dépendance fonctionnelle (U(s)) par un procédé de formation de la valeur moyenne, dans lequel procédé la précision (s) représente l'étendue géométrique ou la puissance de la formation de la valeur moyenne.

7. Procédé selon une des revendications 1 à 4, dans lequel on détermine la dépendance fonctionnelle (U(s)) par une formation de grille dans laquelle la précision (s) représente la finesse de la grille et dans laquelle les fragments des objets irréguliers résultant de cette formation de grille sont remplacés par des fragments prédéfinis de préférence à deux dimensions.

8. Procédé selon une des revendications 1 à 7, dans lequel on détermine la forme à reconnaître en comparant la dépendance fonctionnelle (U(s)) déterminée avec les lignes caractéristiques stockées.

9. Procédé selon une des revendications 1 à 8, dans lequel la précision (s) respective est déduite à partir d'une résolution ou à partir d'une fidélité de détail avec laquelle précision l'objet à n-dimensions est représentée dans le calculateur.

**Figur 1a ( Methode A )**

**Figur 1b**

**Figur 2a ( Methode B )**

**Figur 2b**

Umfang
U(O)/U(s)

Dreieck

Kreis

Figur mit rauhen Rand

D/2

D

**Figur 3a**

**Figur 3b**

**Figur 3c**

**Figur 3d**

**Figur 3e**

**Figur 3f**

**Figur 3g**

**Figur 3h**

**Figur 3i**

**Figur 3j**

|A(f)|   α(l)   y(x)

f   l   x

**Figur 3k**

|A(f)|   α(l)   y(x)

f   l   x

**Figur 3l**

|A(f)|   α(l)   y(x)

f   l   x

**Figur 3m**

**Figur 3n**

Figur 4a

Figur 4b

oder etwas
komplexer:

Figur 4c

Figur 4d

Polygon, das aus den Strecken
und Winkeln des Startpolygons
zusammengesetzt ist

Die markierten Winkel besitzen
gegenüber den entsprechenden
Winkeln des Startpolygons ein
umgekehrtes Vorzeichen.

Startpolygon

# Figur 4e

Winkel um Faktor 1,5 vergrößert

Winkel um Faktor 1,25 vergr.

Originalwinkel

Winkel um Faktor 0,75 verkleinert

Winkel um Faktor 0,5 verkl.

# Figur 4f